# EUROPEAN PATENT SPECIFICATION

(11) **EP 3 296 931 B1**
(45) Date of publication and mention of the grant of the patent: **02.01.2019**
(21) Application number: 16189566.9
(22) Date of filing: 20.09.2016
(51) Int. Cl.: G06N 99/00

(54) **COMPUTER SYSTEM AND METHOD FOR DETERMINING SYSTEM STATE CHANGES**
COMPUTERSYSTEM UND VERFAHREN ZUR BESTIMMUNG VON SYSTEMZUSTANDÄNDERUNGEN
SYSTÈME INFORMATIQUE ET PROCÉDÉ POUR DÉTERMINER LES CHANGEMENTS D'ÉTAT DU SYSTÈME

(43) Date of publication of application: 21.03.2018
(73) Proprietor: Urban Software Institute GmbH, 09116 Chemnitz (DE)
(72) Inventor: Rolle, Oliver, 65239 Hochheim am Main (DE)
(74) Representative: Bittner, Peter

(56) References cited:
- R. Scheepjens: "Algorithm Design for Traffic Signal Timings Predictions of Vehicle Actuated Controlled Intersections using Support Vector Regression", , 23 May 2016 (2016-05-23), XP055351424, Retrieved from the Internet: URL:http://repository.tudelft.nl/islandora /object/uuid:30847f1f-6fdd-4650-8d2e-f63ec 5ae36d8/datastream/OBJ/download [retrieved on 2017-03-03]
- JUN'ICHI KAZAMA ET AL: "Tuning support vector machines for biomedical named entity recognition", NATURAL LANGUAGE PROCESSING IN THE BIOMEDICAL DOMAIN, ASSOCIATION FOR COMPUTATIONAL LINGUISTICS, N. EIGHT STREET, STROUDSBURG, PA, 18360 07960-1961 USA, 11 July 2002 (2002-07-11), pages 1-8, XP058099911, DOI: 10.3115/1118149.1118150
- BORIANA L MILENOVA ET AL: "SVM in Oracle Database 10g: Removing the Barriers to Widespread Adoption of Support Vector Machines", PROCEEDINGS OF THE 31ST VLDB CONFERENCE, 2005, XP055350413,
- MEI KUIZHI ET AL: "A distributed approach for large-scale classifier training and image classification", NEUROCOMPUTING, ELSEVIER, AMSTERDAM, NL, vol. 144, 27 May 2014 (2014-05-27), pages 304-317, XP029045958, ISSN: 0925-2312, DOI: 10.1016/J.NEUCOM.2014.04.042
- MARC CLAESEN ET AL: "EnsembleSVM: A Library for Ensemble Learning Using Support Vector Machines", JOURNAL OF MACHINE LEARNING RESEARCH, vol. 15, 31 January 2014 (2014-01-31), pages 141-145, XP055350582,

## Description

### Technical Field

The present invention generally relates to systems for state change detection and prediction, and more particularly, relates to methods, computer program products and systems using support vector machines for determining state changes.

### Background

Support Vector Machines (SVM) are a well-known member of so-called kernel methods which form a class of algorithms for pattern analysis in machine learning. Kernel methods owe their name to the use of kernel functions, which enable them to operate in a high-dimensional, implicit feature space without ever computing the coordinates of the data in that space, but rather by computing the inner products between the images of all pairs of data in the feature space. This operation is often computationally more efficient than the explicit computation of the coordinates. A kernel function measures the distance between two vectors where the first vector is a data vector to be classified and the second vector is a Support Vector from a trained SVM model. When aggregating the weighted kernel function results for all Support Vectors of the trained SVM model, the aggregate value is an indicator whether the data vector belongs to a first or second class. The first and second class corresponds to two different assertions about a system where the data vector at least partially represents the state of the system.

SVMs are used in a popular machine learning method for classification, regression, and other learning tasks. For example, SVMs can be used to classify a state of a system or to predict the state of a system into the future. However, for complex classification/prediction scenarios typically a huge number of SVMs is required. In typical scenarios, such as predicting the state of traffic light systems thousands or more SVMs may be required. This leads to a large total size of the respective SVM models, and therefore, causes a corresponding large consumption of storage resources such as RAM or disk memory. Further, the SVM models are computed independently from each other which leads to long processing times. Some optimization approaches have been proposed in literature. For example, in " LIBSVM : a library for support vector machines" by Chih-Chung Chang and Chih-Jen Lin; ACM Transactions on Intelligent Systems and Technology, 2:27:1--27:27, 2011 (software available at http://www.csie.ntu.edu.tw/∼cjlin/libsvm), a mechanism is proposed to reduce the size of the SVM models by using a particular compression method for the support vectors of the SVM models. However, the achieved reduction in memory consumption is relatively small compared to the total size of the SVM models.

The master thesis "Algorithm Design for Traffic Signal Timings Predictions of Vehicle Actuated Controlled Intersections using Support Vector Regression" by R. Scheepjens available at https://repository.tudelft.nl/islandora/object/uuid:30847f1f-6fdd-4650-8d2e-f63ec5ae36d8?collection=education discloses an SVM predictor to determine state changes of an observed system.

The paper "Tuning Support Vector Machines for biomedical named entity recognition" by Kazama et al., 2002 discloses support vector caching for mulit-class SVM classifiers. The paper "SVM in Oracle Database 10g: Removing the Barriers to Widespread Adoption of Support Vector Machines" by Milenova et al., 2005 describes how a SVM algorithm is uniquely equipped to handle text mining and bioinformatics data types.

### Summary

Hence, there is a need for improving Support Vector Machine based computations for state determination/prediction of systems which evolve over time with regards to less memory consumption and improved execution performance.

This technical problem is solved by a computer system, a computer-implemented method and a computer program product as disclosed in the independent claims.

In one embodiment, a computer system is provided for determining state changes of a further system. The further system can transition into any one of a plurality of different states. In other words, the further system can transition from state to state. Thereby, the further system can resume a state that it had already at an earlier point in time. Each state is at least partially represented by a corresponding data vector. For example, a data vector may include a plurality of state indicators which may be sensed by respective sensors of the further system. However, typically not all the data which define the state of the further system is observable data. In such cases, SVMs can be used to classify (determine - recognize or predict) the state of the system based on the observable data provided the respective data vectors of the further system.

The computer system has an interface component to receive a particular data vector (DV) which partially represents a particular state of the further system at a particular point in time. Further, a classifier component of the computer system has a plurality of SVMs. Each SVM has a model data structure (SVM model) which includes a plurality of support vectors (SV). The SVs are configured to classify the particular DV. In other words, the computer system can analyze the state transitioning behavior of the further system.

The computer system further has a data storage component to store each support vector once in a support vector data structure (i.e. to store exactly one copy of each support vector). In other words, the computer system can scan the SVMs of the classifier component and determine all redundancies for the SVs across all respective SVM models (model data structures). The data storage component then stores one copy of each SV included in any one of the model data structures in the support vector data structure independent of the number of occurrences of the respective SV in the various model data structures.

The computer system further has a SVM model reducer component configured to replace each support vector in the plurality of model data structures with a reference to the respective storage location in the support vector data structure. For example, the SVM model reducer may replace each SV in a particular model data structure by a reference (e.g., a pointer) to the storage location where the copy of the respective SV is stored. After having processed all model data structures accordingly, the processed model data structures only include such references instead of the original SVs and a referred to as reduced model data structures herein.

Further, the classifier component determines a particular state change of the further system by firstly applying a kernel function to support vectors of a subset of support vectors paired with the particular data vector. Thereby, the subset belongs to a particular reduced model data structure. In other words, the classifier component applies the kernel function to such support vectors in the support vector data structure which are referenced by the particular reduced model data structure which is used for the particular state change determination. Secondly, the classifier component aggregates the kernel function results for the references within the particular reduced model data structure. The aggregate value for the particular reduced model data structure corresponds to the classification result for the particular data vector computed for the particular SVM model. For example, the SVM model may be configured to predict a state change of a particular traffic light to occur in 15 seconds and the aggregate value provides the corresponding result (e.g., red → green).

By eliminating the redundant SVs across multiple SVM models and storing a particular SV only once in the support vector data structure, and by reducing the SVM models to the reduced model data structures (which only include references to the respective storage locations of the SVs in the support vector data structure), the memory consumption of the SVM models is significantly reduced. Further, the cache of the processing component requires less loading operations, because the size of the reduced model data is reduced. This leads to an improved data processing performance when processing a plurality of SVMs for state change determinations because more SVs of the plurality of SVM models can be loaded in the cache of the used processing units (as equal SVs of the plurality of SVM models are loaded just once).

As stated above, typically a great number of SVM models is processed when determining state changes of the further system. Determining a state change, as used herein, includes to recognize a current state changes as well as to predict future state changes of the further system. For example, different SVM models maybe used to predict a particular state change for different future time points. Further, for different state changes different SVM models are used. In such cases, the classifier component can repeat applying the kernel function and aggregating the kernel function results for the plurality of reduced model data structures. In other words, the classifier may perform the kernel function computation and the aggregation of the kernel function results for a plurality or all of the reduced model data structures.

Typically, the various Support Vector Machines are trained with training data sets. In one embodiment, the computer system may include a training component to train the plurality of model data structures with the same training data and with different labels. In supervised learning, one is given a set of training examples X₁ ... Xₙ with labels y₁ ... yₙ, and wishes to predict yₙ₊₁ given Xₙ₊₁. To do so one forms a hypothesis, f, such that f (Xₙ₊₁) is a "good" approximation of yₙ₊₁. A "good" approximation is usually defined with the help of a loss function, ℓ(y , z), which characterizes how bad z is as a prediction of y. One may then choose a hypothesis that minimizes the expected risk. By using the same training data for the plurality of model data structures typically a high degree of redundancy exists with regards to the Support Vectors of the various SVM models. That is, a great number of Support Vectors is used by a great number of model data structures. The higher the redundancy of the Support Vectors is, the higher the reduction in memory consumption achieved by the SVM model reducer.

The SVM model reducer component is further configured to eliminate neutral elements in the support vectors of the support vector data structure. A neutral element is a Support Vector component which does not change the result of the kernel function when applied to two Support Vectors and therefore can be omitted. Then, with each non-neutral element its index and value as an index-value pair is stored in the respective support vector. The index corresponds to the position of the respective value in the Support Vector.

The data storage component stores each index-value pair once in an index-value data structure. Further, the SVM model reducer component replaces the index-value pairs in the plurality of support vectors with references to the respective storage locations in the index-value data structure. This reduction step of the SVM model reducer leads to a further reduction of the memory consumption caused by the storage of the reduced model data structures and the respective Support Vectors. In other words, in this embodiment, the size of the support vector data structure is further reduced by storing only one copy of redundant index-value pairs (i.e. index-value pairs occurring in multiple Support Vectors) in the index-value data structure and replacing the respective index-value pairs in the Support Vectors by corresponding references to the stored index-value pairs. In one example the data storage component can store, for each pair of Support Vector and data vector, the corresponding kernel function result once in a result data structure. Each reduced model data structure is thereby configured to retrieve its respective kernel function results from the respective storage locations in the result data structure. When classifying the data vector by applying the kernel function to the various data vector/Support Vector pairs, in the prior art setup, the same results are computed again and again because of the high redundancy of Support Vectors used by the various SVM models. In this example each kernel function result needs only to be computed once and is stored for reuse by any subsequent computation in further SVM models where the same Support Vector is used. This leads to a significant improvement in the performance of the computations used for the classification of a particular data vector.

For example, the result data structure may be stored in a result cache and the cache address of a particular kernel function result is determined by applying a mapping function (e.g., a hash function, unique memory address of SV, etc.) to at least the input support vector of the particular kernel function result. A particular reduced model data structure is then configured to apply the mapping function to at least its input support vectors to determine the cache addresses of the respective kernel function results. For example, in a scenario where only one data vector is to be classified, it is sufficient to apply the mapping function to the respective support vector(s) and still allow for a unique mapping to determine the cache addresses of the respective kernel function results. The mapping function may also be applied to each pair of input support vector and input data vector. This allows to classify multiple data vectors in parallel and provides a unique mapping to determine the cache addresses of the respective kernel function results for any input data vector. In other words, when the SVM model of a particular reduced model structure is applied to a received data vector, the classifier can apply the mapping function to the data vector and to a particular Support Vector referenced by the reduced mapping structure in order to determine the storage location of the corresponding kernel function result in the result data structure. The retrieval of already computed kernel function results from the result data structure is much faster than the re-computation of kernel function results and provides a significant performance improvement of the classifier operation. If the classifier tries to retrieve a kernel function result for a particular data vector / Support Vector input from the result data structure but no result is available yet for this input (e.g., at the determined cache address), the respective reduced model data structure can compute the corresponding kernel function result and initiate the storage of the computed kernel function result at the determined storage location in the result data structure for later reuse.

In an alternative example the storage locations of the kernel function results may be ordered in a directed acyclic graph.. The directed acyclic graph may be used to determine the memory address (storage location) of the kernel function results in result data structure. In this embodiment, the storage locations of the kernel function results can be ordered in a directed acyclic graph and each reduced model data structure may include respective references to the nodes of the directed acyclic graph to retrieve the respective kernel function results.

In one embodiment, a computer-implemented method is provided according to claim 8.

In one example the method further includes: repeating applying the kernel function and aggregating the kernel function results for the plurality of reduced model data structures.

In one example the method further includes: storing, for each pair of support vector and data vector, the corresponding kernel function result once in a result data structure; and each model data structure retrieving its respective kernel function results from the respective storage locations in the result data structure.

In one example the method further includes: storing the result data structure in a result cache and determining the cache address of a particular kernel function result by applying a mapping function to at least the input support vector of the particular kernel function result; and a particular model data structure applying the mapping function to at least its input support vectors to determine the cache addresses of the respective kernel function results.

In one embodiment, a computer program product is according to claim 12.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

### Brief Description of the Drawings

FIG. 1 shows a simplified diagram of a computer system for determining state changes of a further system according to an embodiment;
FIG. 2A illustrates data structures used for reducing the size of SVM models and improving the performance of state change determination according to various embodiments;
FIG. 2B illustrates the reuse of computed kernel function results by multiple reduced model structures according to an embodiment;
FIG. 3A shows an example for the elimination of neutral elements in a Support Vector according to an embodiment;
FIG. 3B shows an example Support Vector size reduction by using references to an index-value data structure according to an embodiment;
FIGs. 4A and 4B show a simplified flowchart of a computer-implemented method for determining state changes of the further system according to an embodiment;
FIG. 5 illustrates data frame generation for three traffic lights in an example scenario;
FIG. 6 illustrates a traffic light system with vehicle detectors in the example scenario;
FIG. 7 illustrates data frame generation for the example scenario including vehicle detector data;
FIG. 8 illustrates an example embodiment of the computer system allowing state change prediction of the traffic light states; and
FIG. 9 is a diagram that shows an example of a generic computer device and a generic mobile computer device, which may be used with the techniques described here.

### Detailed Description

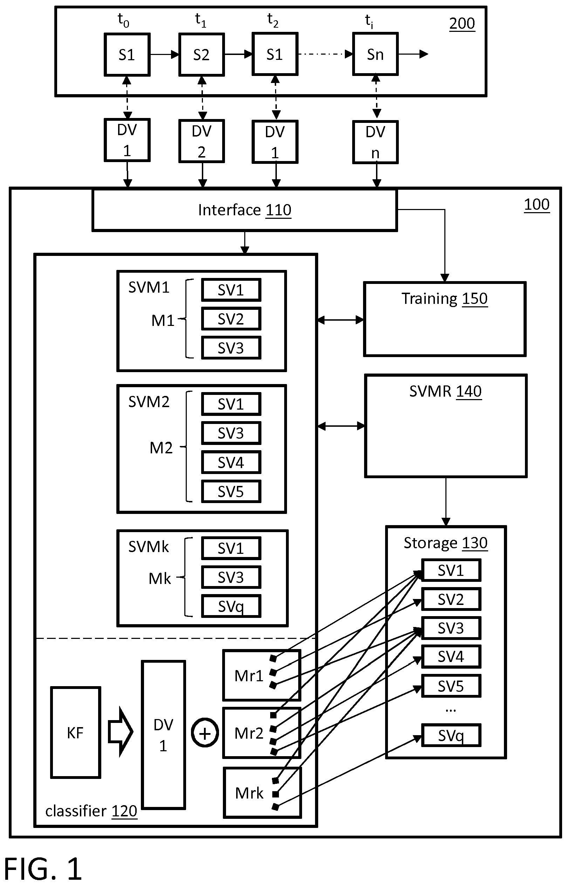

FIG. 1 shows a simplified diagram of computer system 100 for determining state changes of a further system 200 according to an embodiment of the invention. The further system 200 can transition into a plurality of different states S1, S2, .., Sn. At the end of the transition the further system is in a new state. In the example, at t₀, the further system 200 is in the state S1. At t₁, the further system 200, has transitioned into state S2. At t₂, the further system 200, has transitioned back into state S1. There further system may continuously perform state changes and, at tᵢ, reaches the state Sn. Each state S1, S2, .., Sn is at least partially represented at a particular point in time by a corresponding data vector DV1, DV2, ..., DVn. In other words, a particular data vector DV can represent the corresponding state of the system in that it includes parameters which can be observed in the further system 200. There may also be non-observable parameters characterizing the state of the further system. However, such non-observable parameters cannot be part of the data vector. Therefore, a challenge is to determine or predict state changes of the further system 200 based on the observable parameters provided by the state characterizing data vectors DV (i.e. data vectors at least partially representing the state).

This problem is solved by the computer system 100. The computer system 100 has an interface component 110 adapted to receive the state characterizing data vectors from the further system 200. For example, the particular data vector DV1 partially representing a particular state S1 of the further system 200. In the example, the further system has the state S1 at t₀ and t₂. In the following, the state transition S2(t₁) → S1(t₂) is used as an example. The interface 110 can be any interface which is appropriate to exchange data between the further system 200 and the computer system 100. The received data vectors may be provided to further components of the computer system 100 (e.g., the classifier 120 of the training component 150) via an internal communication bus of the computer system 100.

The classifier component 120 of the computer system 100 has a plurality of Support Vector Machines SVM1 to SVMk. Each Support Vector Machine has a model data structure M1 to Mk (SVM model) which includes a plurality of Support Vectors configured to classify the particular data vector DV1. Typically, a classifier for a real world state prediction system for a system like, for example, a production system or a traffic light system, can include thousands of SVM models for providing state change predictions at a defined level of accuracy. For example, for the prediction of the state changes in a traffic light system with four traffic lights, for each traffic light a plurality of SVM models is used, where, for example, for each state change (e.g., red → yellow, red → green, green → red, etc.) a corresponding SVM model is required. Further, for predicting switching behavior at future points in time a dedicated SVM model is required per state change for each point in time. As a consequence, for real world complex system behavior, typically, a large number of SVMs is necessary.

The computer system 100 further has a data storage component 130 to store the Support Vectors SV1 to SVq used by the SVM model data structures M1 to Mk in a support vector data structure. Thereby, a SVM model reducer component (SVMR) 140 of the computer system can identify redundancies of the Support Vectors in the various model data structures M1 to Mk and ensure that only one copy of each Support Vector SV1 to SVq is stored in the data storage component 130. For example, the SVMR 140 may scan each model data structure M1 to Mk and instruct the data storage component 130 to append each identified not yet stored Support Vector to the support vector data structure. As a result, all Support Vectors SV1 to SVq which are included in any one of the model data structures M1 to Mk is stored once in the data storage component 130.

The SVMR 140 is further adapted to replace each support vector SV1 to SVq in the plurality of model data structures M1 to Mk with a reference to the respective storage location in the support vector data structure. As a result, the classifier 120 now has a plurality of reduced model data structures Mr1 to Mrk which only include references to the Support Vector copies stored in the data storage 130 instead of the entire Support Vectors (as it was the case with the original model data structures M1 to Mk). The references are illustrated by the arrows pointing from little black squares in the reduced model data structures Mr1 to Mrk to the respective Support Vectors. For example, reduced model data structure Mr1 has references to Support Vectors SV1, SV2, SV3. Reduced model data structure Mr2 has references to the Support Vectors SV1, SV3, SV4, SV5, and so on.

In the example, the original model data structures M1 to Mk include three copies of SV1 and three copies of SV3. In the reduced model structures Mr1 to Mrk the redundancies are replaced by said references and both, SV1 and SV3, are stored only once in the computer system leading to a reduction of the memory consumption by the corresponding SVM models. It is to be noted that the original model data structure and the reduced model data structures still include the same SVM models. After the generation of the reduced model data structures the original model data structures may be deleted from the computer system 100 to free up memory space as they are not needed any more. For example, the original model data structures may be stored in a back-up system which does not cause any burden to the computer system in terms of resource consumption.

The classifier component 120 can now determine (recognize or predict) a particular state change S2(t₁) → S1(t₂) of the further system 200 by applying a kernel function KF to a subset of the plurality of Support Vectors paired with the particular data vector DV1 wherein the subset belongs to a particular reduced model data structure Mr1 to Mrk. In other words, the kernel function KF is applied to each Support Vector (e.g., SV1, SV2, SV3) referenced by a particular reduced model data structure (e.g., Mr1) when paired (or combined) with the particular data vector DV1. Then, the kernel function results are aggregated for the references within the particular reduced model data structure (e.g., Mr1).

Although a determination of a state change of the further system 200 may already be achieved by computing the aggregate kernel function result for one corresponding reduced model data structure, typically the aggregate kernel function results are computed for a plurality or all of reduced model data structures (Mr1 to Mrk). That is, the classifier component 120 may repeat applying the kernel function (KF) and aggregating the kernel function results for the plurality or all of the reduced model data structures.

In empiric studies for real world prediction scenarios a reduction of the size of the original model data structures up to a factor of 1,000 was achieved and processing speed increased by a factor of 100. A model with 50 SVM models and with a total of 106,629 Support Vectors could be reduced to 10,000 unique Support Vectors. Furthermore the original 194,242,835 index-value pairs could be reduced to 20,880 unique index-value pairs. This significant reduction in size allows to load more SVM models into the processor cache of the computer system which results in significant performance gains when using the reduced model data structures instead of the original data model structures. Using the processor cache allows more efficient access of the processor to the respective data when compared with accessing data stored in the main memory. The number of data transfers from main memory to the processor cache is therefore significantly reduced when more of the required SVM models can be stored in the processor cache.

In one example the computer system may include a training component 150 to train the plurality of model data structures M1 to Mk with the same training data and with different labels. A person skilled in the art of machine learning and Support Vector Machines how to train the SVM models to learn a target function. The learned target function classifies input data. The target function is determined by the training data. Details how target functions (also known as objective function) are determined by Support Vector Machines is disclosed by Chang, Chih-Chung, and Chih-Jen Lin in "LIBSVM: A library for support vector machines", ACM Transactions on Intelligent Systems and Technology (TIST) 2.3 (2011): 27.. It may be advantageous to perform the training of the SVM models based on the same training data because in this case a high redundancy of the respective Support Vectors across the various model data structures can be expected. As a consequence, the effect of size reduction according to the disclosed approach by using the reduced model data structure is higher the higher the redundancy of Support Vectors in the original model data structures.

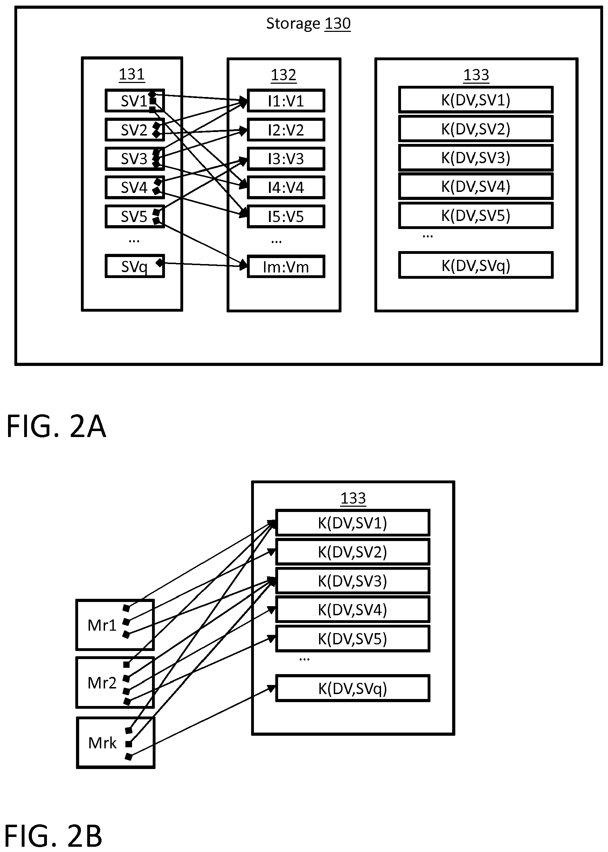

FIG. 2A illustrates data structures 131, 132, 133 stored in the data storage 130. The data structures 131, 132, 133 can be used for reducing the size of SVM models and for improving the performance of state change determination according to embodiments of the invention.

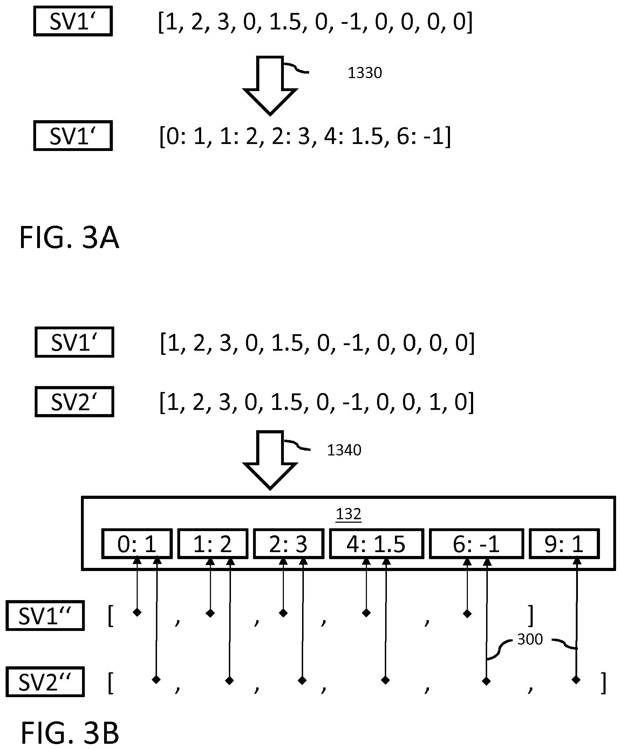

The data structure 131 corresponds to the support vector data structure 131 which was already explained in the description of FIG. 1. The data structure 132 is an index-value data structure 132 which will now be explained in more detail in the context of FIGs. 3A and 3B. Thereby, FIG. 3A shows an example for the elimination of neutral elements in a Support Vector according to an embodiment of the invention, and FIG. 3B shows an example Support Vector size reduction by using references to the index-value data structure 132 according to an embodiment of the invention.

FIG. 3A illustrates a Support Vector SV1' [1, 2, 3, 0, 1.5, 0, -1, 0, 0, 0, 0] which is stored in the support vector data structure 131. The SV elements having a value "0" are called neutral elements of the Support Vector SV1' because they have no impact on the computation of the respective kernel result. Therefore, the neutral elements can be eliminated 1330 by the SVMR without loss of information. To ensure that the non-neutral elements of SV1' are correctly used in the computation of the kernel function results, they are stored together with an index as index-value pair in the respective support vector SV1'. In the example, the positions of the vector elements are counted from 0, starting from the left.

In the example, the SV1' component at the vector position 0 has the value 1, the vector element at position 1 has the value 2, and so on. The corresponding index-value pairs 0:1 and 1:2 indicate the original position in the vector as the index followed by the separator":" and the respective value of the element. This method of Support Vector compression is known as [LIBSVM] in the art. In addition, data storage component can now store 1340 each index-value pair once in the index-value data structure 132 and replace the index-value pairs in the plurality of support vectors with references to the respective storage locations in the index-value data structure 132. This is illustrated in FIG. 3B. The second Support Vector SV2' [1, 2, 3, 0, 1.5, 0, -1, 0, 0, 1, 0] differs from the first Support Vector SV1' only in the elements at position 9. In SV1' position 9 includes a neutral element whereas SV2' includes the non-neutral element with value 1. The index-value data structure 132, accordingly, stores 1340 each index-value pair 0: 1, 1: 2, 2: 3, 4: 1.5, 6: -1 occurring in both Support Vectors only once. In addition, it stores 1340 the index-value pair 9:1 derived from the Support Vector SV2'. In the corresponding Support Vectors the index-value pairs are now replaced with references 300 to the storage locations of the respective index-value pairs in the index-value data structure 132. In the figure, the reference is shown only for the replacements of the index-value pairs 6:-1, 9:1 leading to the reduced Support Vector SV2". However, it is to be understood that each arrow pointing from the reduced Support Vectors SV1" and SV2" to the stored index-value pairs represents such a replacement of the original index-value pair with the corresponding reference (e.g., pointer). The reduction can be applied to all Support Vectors stored in the support vector data structure, leading to a further reduction of the support vector data structure, and therefore, a further size reduction of the plurality of SVM models.

FIG. 2A further shows a result data structure 133 being stored in the storage component 130 in one embodiment of the invention. FIG. 2B illustrates the reuse of computed kernel function results by multiple reduced model structures Mr1 to Mrk according to an embodiment of the invention wherein the kernel function results are stored in the result data structure 133. The result data structure 133 can store the kernel function results at dedicated storage locations in the data storage 130. The kernel function results are illustrated by the notation K(DV,SVi). For example, the kernel function result K(DV,SV1) is the result when computing applying the kernel function to the received data vector DV paired with the support vector SV1 (stored in the support vector data structure). The result data structure 133 does not include redundant kernel function results. In other words, a kernel function result for a particular pair of data vector and Support Vector is computed once and sorted once at the respective storage location. A particular reduced model data structure Mr1 to Mrk can then retrieve the kernel function results for the data vector paired with the Support Vectors referenced by the particular reduced model data structure from the respective storage locations in the result data structure 133.

For example, in one embodiment, the result data structure 133 is stored in a result cache and the cache address of a particular kernel function result, e.g., K(DV,SV1), is determined by applying a mapping function to at least the support vector of the particular kernel function result. In other words, a mapping function, such as for example a hash function or the unique memory address of the support vector generating a unique code of the input support vector SV1, is translated to a memory address corresponding to the storage location of the kernel function result of K(DV,SV1). Each reduced model data structure referencing the Support Vector SV1 (in the example, Mr1, Mr2, and Mrk) can now apply the same (known) mapping function to its input Support Vectors to determine the cache addresses of the respective kernel function results in relation to the referenced Support Vectors. As a consequence, a particular kernel function result for a particular pair of data vector and Support Vector (DV,SVi) needs only be computed once and stored at the respective storage location in the result data structure 130. Then any SVM model (reduced data structure) referencing the same input Support Vector SVi can simply retrieve the pre-computed and stored kernel function result from the result data structure. The result retrieval from the result data structure is significantly faster than the re-computation of the same kernel function result again and again by all SVM models referencing the same Support Vector. Hence, significant performance gains are achieved when determining the state changes of the further system.

In one example the mapping function is applied to each pair of input Support Vector and input data vector. In this embodiment for each combination of data vector and Support Vector a corresponding memory address is computed. Because the further system transitions between a limited number of states S1 to Sn, the number of the data vectors DV1 to DVn partially representing those states is also limited. That is, for a given further system where the possible states are known, the size of the result data structure, and therefore the associated address space for storing the kernel function results, is also known.

For example, in case a particular reduced model data structure Mr1 to Mrk tries to access a stored kernel function result for a referenced Support Vector but does not find a corresponding pre-computed kernel function result at the respective determined cache address, the classifier can compute the respective kernel function and initiate the storage of the computed kernel function result at the determined cache address. This result is now available for all further accesses by the SVM models of the classifier.

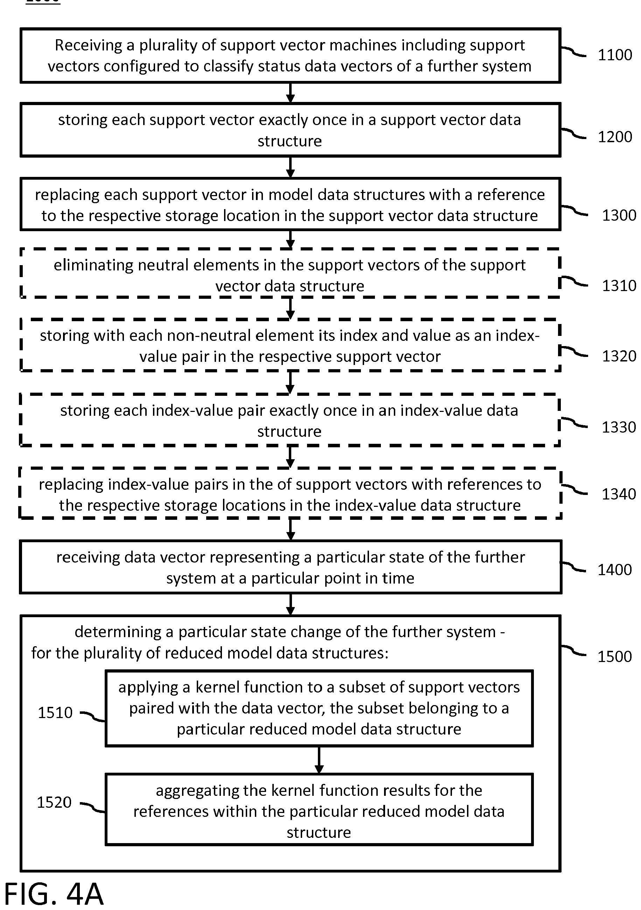

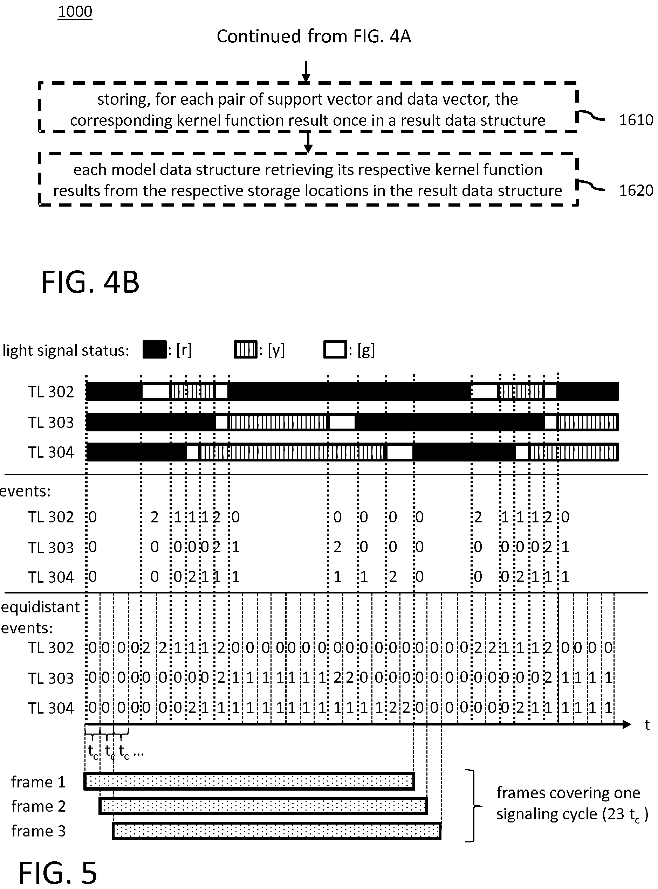

FIG. 4 is a simplified flowchart of a computer-implemented method 1000 for determining state changes of the further system according to an embodiment of the invention. The method 1000 can be executed by the previously disclosed computer system when loading a computer program product with instructions into a memory of the computer system wherein the instructions implement the various functions of the computer system, and the computer system uses one or more processors to execute those instruction causing the computer system to execute the method 1000.

The computer-implemented method 1000 can determine state changes of a further system wherein the further system can transition into a plurality of different states. Each state is at least partially represented by a corresponding data vector. The method includes: receiving 1100 a plurality of Support Vector Machines. Each support vector machine has a model data structure which includes a plurality of Support Vectors configured to classify status data vectors of the further system. The Support Vector Machines may be imported into the computer system from an external model database or they may be generated by the computer system with a training component of the computer system.

The computer system can then reduce the size the SVM models by storing 1200 each support vector once in a support vector data structure. For example, the computer system can scan the SVM models for redundancies by generating the support vector data structure in such a way that a copy of a particular Support Vector is stored when it occurs in a SVM model for the first time. Further occurrences of the same Support Vector are ignored when generating the support vector data structure.

The computer system then replaces 1300 each Support Vector in the plurality of model data structures (SVM models) with a reference to the respective storage location in the support vector data structure resulting in a plurality of reduced model data structures. By eliminating the redundant storage of Support Vectors through the support vector data structure in combination with the replacement of Support Vectors by references a significant reduction of the memory size occupied by the SVM models is achieved. The reduction in size leads to a situation where more SVM models can be loaded into the processor cache of the computer system. This further improves the system performance for the following classification steps to determine the state changes of the further system.

For determining state changes of the further system, the computer system receives 1400 a particular data vector representing a particular state of the further system at a particular point in time. This data vector can then be classified by using the SVM models of the computer system. In other words, to determine 1500 a particular state change of the further system, a classifier of the computer system applies 1510 a kernel function to a subset of Support Vectors paired with the particular data vector. The subset of Support Vectors relates to a particular reduced model data structure. In other words, the Support Vectors referenced by the reduced model data structure used for classification of the data vector serve as input Support Vectors to the kernel function in combination with the data vector to be classified. Then, the kernel function results are aggregated 1520 for the references within the particular reduced model data structure (i.e. the kernel function results for each pair of data vector/Support Vector for the respective SVM model are aggregated).

Optionally, the applying 1510 and aggregating 1520 steps may be repeated for further SVM models (reduced model data structures). The more SVM models are used for classification, the higher are the memory savings and performance gains of the system. In real world classification scenarios typically thousands of Support Vector Machines with corresponding SVM models may be used.

The method 1000 may further include eliminating 1310 neutral elements in the support vectors of the support vector data structure; storing 1320 with each non-neutral element its index and value as an index-value pair in the respective support vector; storing 1330 each index-value pair once in an index-value data structure; and replacing 1340 the index-value pairs in the plurality of support vectors with references to the respective storage locations in the index-value data structure. The elimination of redundancies in the storage of index-value pairs further reduces the total size of the SV models by reducing the size of the stored Support Vectors and has a further positive effect on the system performance for the same reasons as explained earlier in the context of the reduced model data structures.

In an optional embodiment, the method 1100 further includes storing 1610, for each pair of support vector and data vector, the corresponding kernel function result once in a result data structure; and each model data structure retrieving 1620 its respective kernel function results from the respective storage locations in the result data structure. This allows to compute kernel function results only once and re-use them, once computed, by any SVM model by simply retrieving the pre-computed results from the result data structure. In one implementation, the result data structure can be stored in a result cache and the cache address of a particular kernel function result can be determined by applying a mapping function (e.g., a hash function) to at least the support vector of the particular kernel function result. A particular reduced model data structure can then apply the same mapping function to at least its input support vectors to determine the cache addresses of the respective kernel function results. In other words, the reduced model data structure can compute (on the fly) the reference to the storage location of the respective kernel function result by using such a predefined mapping function.

The above disclosed concepts and features can be applied in various application scenarios. In the following, three different application scenarios are described to which a person skilled in the art can apply the above method(s).

A first application scenario relates to signal prediction of light signals generated by traffic light systems. The prediction of a light signal uses for each predicted future second a respective SVM prediction model. For each second 1, 2, 3, ..., k a corresponding SVM model (svm_1, svm_2, svm_3, ..., svm_k) is trained which predicts the signal color status in 1, 2, 3, ..., n seconds (counted from the current point in time). The disclosed optimization algorithm reduces the RAM space and the CPU time needed to compute the prediction of a signal state for all or for a subset of svm_1, svm_2, svm_3, ..., svm_k. This optimization can be applied in a similar way for multiple signals of a traffic light.

FIG. 5 illustrates data frame generation for three traffic lights (TL) 302, 303, 304 as it may be used in the first application scenario. The machine learning algorithm requires so-called data frames as input. A data frame corresponds to a sequence of status vectors including the characteristic signal switching behavior of a plurality of traffic lights. This sequence needs to include status vectors at a constant rate. However, typically light status sensors provide status updates of the light signal status of the respective traffic lights when the status changes. This is shown in the example of FIG. 5. At the top of FIG. 5 the legend for the light signal status is defined. In the example, the traffic lights only switch between three states: [r], [y] and [g]. The upper portion of the figure shows the switching cycles of the three traffic lights 302, 303, 304 over time t. Each change of state is marked with a vertical dotted line.

The second portion of the figure (events) shows the status vectors associated with each switching event. Each status vector represents the current state of the traffic control system including TL 302, 303, 304 in this order. In the example, the states [r], [y], [g] of each traffic light are represented by the numbers 0, 2, 1, respectively. The numbers representing the states may also be normalized. In this case the states [r], [y], [g] would be represented by the numbers 0, 1, 0.5, respectively. That is, the light signal data is normalized to the interval [0, 1]. It may be advantageous to normalize the data because all data values are within the same value range with similar properties (e.g., between 0 and 1, between -1 and 1, or within other appropriate value ranges dependent on the machine learning algorithm). In general, normalization of the data can facilitate the learning process for the computer. Assuming a first light signal sequence (A): [g] → [y] → [r], and a second light signal sequence (B): [r] → [y] → [g]. In a first normalization example, [r], [y], [g] can be mapped to (0, 0.5, 1). In a second normalization example, [r], [y], [g] can be mapped to (0, 2, 1). Both normalizations are valid but under certain circumstances the first normalization may be advantageous. For the first normalization, the monitoring system computer can learn a linear function f(t) = a + b * t for the signal sequences (A) and (B), with t being the time and a, b being degrees of freedom which are determined by the computer based on the training data. The linear property comes from the normalized data of the first normalization where the distance between the numerical values representing the light signal states is 0.5. For the example sequences, the data for (A) is 0 < 0.5 < 1 and the data for (B) is 1 > 0.5 > 0 and the first derivative of f(t) is constant. For the second normalization a non-linear function needs to be learned by the computer because for the sequences (A) with 0 < 2 > 1 and (B) with 1 < 2 > 0 the first derivative of f(t) is a function of t. The distance between 0 and 2 further varies from the distance between 2 and 1. That is, a linear function is not sufficient for the computer to learn the sequences (A), (B). Dependent on the machine learning algorithm the monitoring system computer may introduce additional degrees of freedom a, b, c which increases the complexity of the to-be-learned-function: f(t) = a + b * t + c * t * t. The degrees of freedom a, b, c are to be learned from the received data. In general, for such non-linear functions more data and more time is required for the learning process than in the case of using a normalization with a linear function. As a consequence, the first normalization would be preferable over the second normalization because it facilitates signal sequence recognition for the monitoring system.

For visualization purposes the non-normalized values are used in the example. The initial state is that all three traffic lights are red. The corresponding status vector is (0, 0, 0). Then TL 302 changes to yellow. Thus, the corresponding (non-normalized) status vector is (2, 0, 0), and so on.

In case that the events are not equidistant, the machine learning algorithm is not able to process the raw data as they come in. Therefore, the inbound interface may first perform an auto-completion step for the incoming data stream. The result of this step is shown in the third portion of the figure (equidistant events). The inbound interface determines a time interval t_{c} which is used as the base interval for generating artificial events. The time interval t_{c} should be at least as small as the smallest time interval between two real events in the event portion. As long as the overall status of the observed traffic control system does not change (i.e., the time interval between two real world switching events) the inbound component generates artificial events every time interval t_{c} by replicating the current status vector. As a result, a series of equidistant events with corresponding status vectors is generated. Then, each data field of each frame may be normalized. Normalization can be achieved through mapping a status value onto the interval between 0 and 1. Light signal and other detector data values may already have values between 0 and 1. If the elapsed time after a program start is used (e.g., for improved prediction accuracy), the respective program time data field may also be normalized so that the program time data field values lie between 0 and 1.

Finally, consecutive data frames can be defined as input data for the machine learning algorithm. The start event of a frame is the equidistant event which follows the start event of the previous frame. In the example the first three frames frame 1, 2 and 3 are shown wherein the second frame is separated from the first frame by time interval t_{c}. Thereby, each data frame includes the same number of equidistant status vectors. In other words, each data frame has the same length. It may be advantageous to use a frame length which covers at least one switching cycle of the observed traffic control system. This may ensure an acceptable level of prediction accuracy. However, when additional accuracy relevant data can be taken into account in the status vectors, also smaller frame lengths may lead to acceptable prediction accuracy. In the example, the switching cycle of the traffic control system includes 23 t_{c} and the frame length is chosen accordingly.

In general, a frame with t=0 being the current time, event(t=0) representing the status status vector of the traffic control system at the current time, and n being the number of equidistant time intervals t_{c} defining the length of the frame, has the following structure:
frame:= [event(t=0), event(t= t_{c}), ..., event(t= (n-1)t_{c}), event(t= nt_{c})]

Events at times with t > 0 describe the status of the traffic control system in the past. Events at times t < 0 describe future states of the traffic control system. The frames are then further processed by the computer system having a training component and a classifier component for.

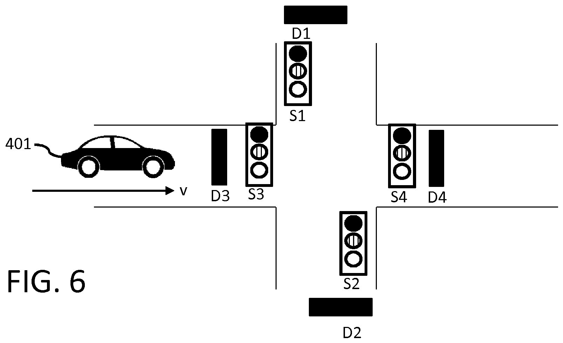

FIG. 6 is an example scenario for a traffic control system at an intersection with four traffic lights S1 to S4 and four associated vehicle detectors D1 to D4. Typically, the vehicle detectors are induction coils which are worked into the road in front of a traffic light to detect whether a vehicle is already waiting in front of the traffic light. This may affect an earlier status change of the traffic light form red [r] to green [g] if compatible with the overall traffic situation. However, also while the status is green [g] the detected signals of the detectors D1 to D4 can provide valuable information about the overall traffic situation. For example, the frequency of detector signals may indicate the density of the traffic. Other types of detectors (e.g., pressure detectors, video camera systems, etc.) can be used in alternative embodiments to implement D1 to D4. In the example scenario, a vehicle 401 is approaching traffic light S3 and its associated detector D3. The vehicle may go at speed v. However, the speed may vary over time and other vehicles may drive at a different speed.

The traffic lights S1 to S4 are monitored by respective sensors or directly via a traffic light control system. Once a traffic light status has been determined for a respective traffic light, it is sent to the interface component of the computer system for determining state changes to feed its SVM prediction models.

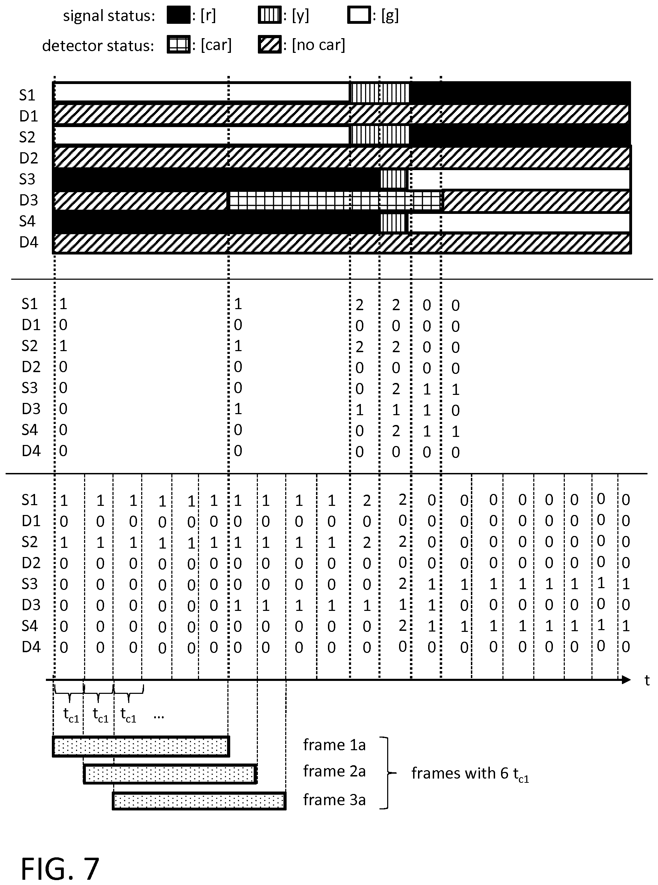

FIG. 7 illustrates data frame generation for the example scenario for FIG. 6 according to one embodiment of the invention. The methodology for the frame generation is similar to the scenario describe in FIG. 5. However, in the example scenario the additional signals of the vehicle detectors D1 to D4 are part of the status vectors defining the events. In general, the proposed light signal prediction solution can cope with sequences of signals which are substantially periodical, and can further take into account signals which have more of an accidental character like detector signals detecting the presence of a vehicle.

Similar as in FIG. 5, at the top FIG. 7 a legend defines the visual representation for light signal status [r], [y], [g] of the traffic lights S1 to S4. In addition, the visual representation of the detector status [car], [no car] of the detectors D1 to D4 is defined. [car] stands for a situation, where a vehicle is detected by the respective detector. Otherwise, the detector status is [no car]. Again, in the example, the traffic lights only switch between three states: [r], [y] and [g]. The upper portion of the figure shows the switching cycles of the four traffic lights S1 to S4 over time t. Further, the upper portion includes the traffic status (e.g., detector status D1 to D4) of each detector. Each change of state is marked with a vertical dotted line. Thereby, the change of the traffic status of a particular detector is also considered as a change of state of the traffic control system. In the example (cf. FIG. 6), the traffic status detected by D3 changes from [no car] to [car] when the vehicle 401 is located within the detection range of D3. It changes again to [no car] when the vehicle 401 leaves the detection range of D3. In the example, the signal status of S3 is [r] when the vehicle 401 arrives and the detector status of D3 changes to [car]. Shortly after the status of traffic light S3 changes to [g] the vehicle 401 is passing the traffic light S3 and leaves the range of detection of D3. At his point in time the traffic status detected by D3 switches back to [no car].

The interface component may receive further information like the traffic light program ID or the traffic light elapsed program time of the observed traffic light (if available via a TMS) to the received light signal status data for further prediction accuracy improvements. The TMS switches the traffic light program according to the traffic situation and/or time of day. When switching from one traffic light program to another the traffic light program ID changes. The machine learning algorithm detects the change and can select a corresponding prediction model for the changed program ID.

Similar to FIG. 5, the second portion of FIG. 7 shows the status vectors associated with each switching event including the detector events. Each status vector represents the current state of the traffic control system including pairs of light signal status and traffic status for each traffic light and its associated detector (S1, D1, S2, D2, S3, D3, S4, D4). Again, in the example the states [r], [y], [g] of each traffic light are represented by the (non-normalized) numbers 0, 2, 1, respectively. The states [car], [no car] of each detector are represented by the numbers 1, 0, respectively. The initial status vector is (1, 0, 1, 0, 0, 0, 0, 0). Then D3 detects the vehicle 401 and the status vectors changes to (1, 0, 1, 0, 0, 1, 0, 0). The following status change events can be retrieved from the figure.

Again, the machine learning algorithm requires equidistant events as input. Therefore, the inbound interface may, similar as in FIG. 5, perform an auto-completion step for the incoming data stream where the detector data streams are included as well. The result of this step is shown in the third (equidistant events) portion of the figure. The inbound interface determines a time interval t_{c1} which is used as the base interval for generating artificial events. The time interval t_{c1} should be at least as small as the smallest time interval between two real events in the event portion. The interface component may generate artificial events every time interval t_{c1} by replicating the current status vector as long as the overall status of the observed traffic control system does not change. As a result, a series of equidistant events with corresponding status vectors is generated.

Finally, consecutive data frames are defined as input data for the machine learning algorithm. The start event of a frame is the equidistant event which follows the start event of the previous frame. In the example the first three frames frame 1a, 2a and 3a are shown wherein the second frame is separated from the first frame by time interval t_{c1} Thereby, each data frame includes the same number of equidistant status vectors. In this example, the frame lengths are chosen as six t_{c1}. Although in this case the frame length is below the length of one switching cycle of the observed traffic control system it may still ensure an acceptable level of prediction accuracy because additional the traffic status data of the detectors D1 to D4 provide additional accuracy relevant data.

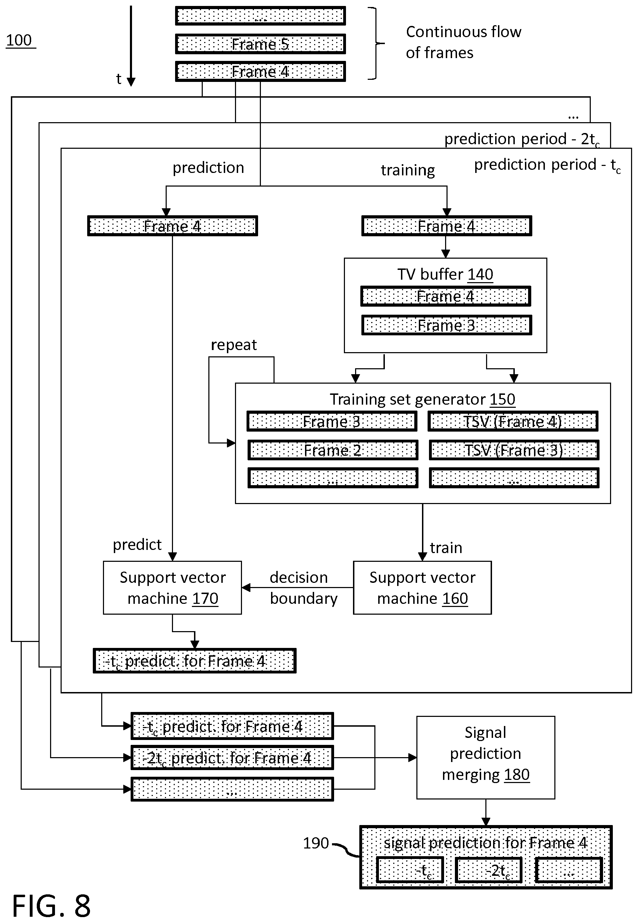

FIG. 8 illustrates components of the monitoring system 100 which may be used to implement a machine learning algorithm and to perform light signal prediction according to one embodiment of the invention. The training and prediction of light signal states can be done while the monitoring system is in operation (online) so that the prediction algorithm can adapt itself automatically to light signal program changes. The analytics component can be configured to compute light signal status predictions for different future points in time which are a multiple of the equidistant event time interval (e.g., t_{c}). For example, the a prediction may be computed for a future prediction period - t_{c}, a future prediction period - 2t_{c}, and so on. There is no need to compute all possible prediction periods. For example, if only a prediction is required for the status of the traffic control system in exactly 30 seconds, then only one prediction period may be computed which relates to prediction period -(30/|t_{c}|)t_{c}, where |t_{c}| is the length of t_{c} in seconds.

The interface component receives a continuous flow of frames (Frame 4, Frame 5, ...) over time which can be generated as described in the context of FIGs. 5 or 7. Further, the interface may be configured to duplicate the received sensor data stream and to delay one of the two sensor data streams versus the other. One data stream can be used for online prediction, the other for training. In this embodiment, the training data stream is delayed by a time interval t_{future} which is a multiple of t_{c}. t_{future} corresponds to the time point for which the monitoring system is able to predict the future light signal status of the traffic control system. The current status of the traffic control system in the non-delayed data stream appears to be in the future from the perspective of the delayed data stream. Thereby the system can learn from the past and project the learnings into the future. In other words, from the perspective of the delayed data stream the analytics component is aware of all apparently future events up to t_{future}. Therefore, for the training data stream, the time when a light signal switches its color can be calculated deterministically. The trainings sample and its corresponding online prediction can be used to give feedback to the machine learning algorithm. The algorithm may use this feedback to increase prediction accuracy and may automatically adapt to programming changes in the traffic control system. This allows to also including dynamic changes which are caused by traffic status sensor data as shown in FIG. 7.

For example, a buffer can be used as a delay element. In the example embodiment, the delayed data stream is used for training purposes of the machine learning algorithm. The training vector (TV) buffer can be implemented as a FIFO (first in first out) memory structure component to buffer the respective training vectors in the order as they are received. In the example, the currently received frame is Frame 4. The earlier received frames which were already stored in the buffer are Frames 2 and 3. Frame 4 is buffered after the previously received Frame 3.

In other words, the TV buffer can store the number of frames which is required to allow the lowest number frame in the buffer (i.e., the frame which was received as the earliest frame of the buffered frames) to look at the current frame as a frame which occurs in the future at the intended prediction period. In the example, for the prediction period - t_{c}, buffer 140 only needs to store the current frame (Frame 4) and the previously received frame (Frame 3). For the prediction period - 2t_{c}, buffer 140 needs to store the frames from Frame 4 to Frame 2, and so on. As a result, the training portion of the analytics component can improve later predictions by using the data stream of data frames which is delayed by t_{future}, so that the frame which is perceived by the training portion to be the current training frame is actually reflecting a status of the traffic control system in the past and can look at traffic light states from - t_{c} to - t_{future} t_{c}. The monitoring system is thus enabled to determine the "future" states of the traffic light at times: - t_{c}, - 2t_{c}, ..., -(t_{future}-1) t_{c}, - t_{future} t_{c}.

The training set generator 150 can then associate the earlier received buffered frames with the light signal values of the future frame. In the example, Frame 3 is associated with a training signal vector TSV which includes the current light signal values of the traffic control system available in the current Frame 4. Earlier received Frame 2 was associated with its future training signal vector (TSV) of Frame 3, and so on. For the prediction period - 2t_{c} the training set generator 150 would associate the earlier received Frame 2 with the TSV of current Frame 4, and so on. That is, the training set generator in combination with the training vector buffer can associate any buffered earlier received frame with the TSV of the corresponding actual frame wherein the time interval between the earlier received frame and the current frame corresponds to the time interval for which a prediction value can be computed.

The described training approach allows online and offline learning. The advantage of online learning (during operation of the traffic control system) is that changes to the traffic light program are automatically learned while it is running and do not need any manual human intervention. Further, there is no need for explicit information about the traffic light program itself because the information is implicitly available in the switching cycles of the traffic control system.

An online learning scenario can separate training and prediction, because training of a support vector machine is a computational expensive task, whereas the prediction calculated by a support vector machine is computational inexpensive. Online training is advantageous to keep prediction accuracy high over the long term because the real world traffic flow is changing over time caused by, for example, changes in the road network, behavior changes of drivers and changes in traffic light programs. Therefore, in the example, the training support vector machine (SVM) 160 trains a decision boundary which serves as input to the prediction support vector machine 170 so that the prediction support vector machine 170 uses the trained decision boundary to predict future signal states. In other words, SVM 160 trains, for each new training set, a new decision boundary so that changes in the traffic flow are represented in the boundary after some time which is then injected into the prediction support vector machine 170 so that its predictions consider the changes in the traffic flow.

For each time [- t_{c}, - 2t_{c}, ..., -(t_{future}-1) t_{c}, - t_{future} t_{c}] a SVM is trained for each traffic light signal of the traffic control system. Each SVM is trained by using data frames and their corresponding future signal states as shown in FIG. 8. After training, a list of t_{future} support vector machines is calculated for each traffic signal.

It is possible to train the t_{future} support vector machines for a single traffic light signal with probability estimates so that confidence scores are calculated for each support vector machine. Examples of such training approaches are discloses by Chang, Chih-Chung, and Chih-Jen Lin in "LIBSVM: A library for support vector machines", ACM Transactions on Intelligent Systems and Technology (TIST) 2.3 (2011): 27. This allows more fine grained prediction because confidence levels for all t_{future} states are known and can be used within SPaT messages to provide accuracy information for predictions.

The support vector machine might use a radial basis function, or any other kernel function (e.g., linear, polynomial, Gaussian basis function).

The decision boundary is applied by the prediction support vector machine 170 to the current frame 4 providing the respective prediction result for the light signals of the traffic control system for the respective prediction period. In the example, the computation of the light signal prediction for Frame 4 for the prediction period - t_{c}, is shown in detail. The prediction for further prediction periods - 2t_{c}, ... is computed accordingly.

The frames which are processed by the training component are also consumed by the prediction module (classifier). However, for prediction the non-delayed data stream is used to produce prediction frames. Each prediction frame is generated on a trained support vector machines to predict the signal state at times [- t_{c}, - 2t_{c}, ..., -(t_{future}-1) t_{c}, t_{_future} t_{c}]. If probability estimates are also trained, a confidence level for each prediction is calculated. The prediction and the confidence level (if available) may forwarded to the interface component for publishing the predicted signal changes to external systems or devices (e.g., vehicle control systems).

The computer system can be configured to compute predictions for a range of prediction periods. The various results can finally be merged by a signal prediction merging component 180 into a single data structure 190 including all signal predictions for Frame 4 for the whole range of prediction periods. The messages M1 to M3 in FIG. 1 may include such merged signal predictions.

### Example scenario Green Light Optimal Speed Advisory (GLOSA):

Vehicles circulating in urban areas are typically subject to frequent stops and changes of speed due to varying traffic conditions and traffic lights regulating the vehicle movement across the city. As a result, a vehicle consumes more energy and has an increased wear in different subsystems such as breaks.

It is well known that many sudden speed variations can be avoided if the vehicle (or its driver) knows beforehand whether an upcoming traffic light signal could be reached or not, and at what speed the vehicle should circulate in order to minimize the number of stops.

In the GLOSA scenario, the current status of a traffic light is broadcasted to vehicles being within a predefined distance and approaching the traffic light (e.g., at an intersection). In addition, information about the intersection topology itself and the expected light phase schedule of each traffic signal (predicted light signal status) at the intersection is broadcasted to the vehicles. The information in the corresponding sent messages may be sent in SPaT and/or MAP message format. For example, SPaT messages are specified in the US standard J2735 version 201509 from 2009-11-19.

The vehicles approaching the intersection can receive this information and correlate it with the expected route in order to determine the optimal approximation speed. An optimal approximation speed allows a vehicle to improve the energy efficiency and significantly reduce the number of unnecessary stops.

In the GLOSA scenario the outbound status provisioning component can forward the status prediction results to a vehicle systems coordinator system.

The vehicle systems coordinator system then determines which vehicles shall receive the predicted status information according to their location and heading and forwards the relevant traffic light phase prediction information to the identified vehicles. The vehicles receive the information and adjust their powertrain systems accordingly. If a particular vehicle is able to reach the traffic light of the intersection under green light within allowed speed limits and traffic conditions then the vehicle adjusts its speed to reach green light. If the vehicle is unlikely to reach the green light, the vehicle systems may notify the driver and can prepare to slow down the vehicle speed to avoid crossing under red light. Further, this avoids sudden and dangerous breaking maneuvers.

A person skilled in the art can apply the teachings for model reduction as disclosed in the figures 1 to 4B to the SVMs used in the scenario illustrated in figures 5 to 8 to realize the disclosed optimization with regards to memory consumption and processing performance.

A second application scenario relates to weather prediction. The prediction of weather conditions may use a particular SVM prediction model for each predicted future period (e.g., hours, days, etc.). So for each period 1, 2, 3, ..., k a corresponding SVM model (SVM_1, SVM_2, SVM, ..., SVM_k) is trained which predicts the rain or no rain for the periods 1, 2, 3, ..., n in the future (e.g., in 1, 2, 3, ..., k hours). The disclosed optimization algorithm reduces the RAM space and CPU time needed to calculate the prediction of a weather state for all or a subset of SVM_1, SVM_2, SVM, ..., SVM_k. This optimization can be applied in a similar way to predict other weather conditions like humidity, temperature and clouds.

A third application scenario relates to determining the usage of a vehicle. The classification of vehicle usage may use measured data of vehicles, like velocity, accelerator pedal state, breaking pedal state, engine revolution and others to classify the driving modes in which the car was used, such as for example, sporty / non-sporty driving mode (SVM_sporty), cozy / non-cozy driving mode (SVM_cozy), and/or fuel efficient / non- fuel efficient driving mode (SVM_fuelefficient). The described optimization algorithm reduces the RAM space and CPU time needed to calculate the classification of sporty / non-sporty, cozy / non-cozy and fuel efficient / non- fuel efficient driving modes for all or a subset of SVM_sporty, SVM_cozy and SVM_fuelefficient. This optimization can be applied in a similar way to classify other driving modes of the vehicle.

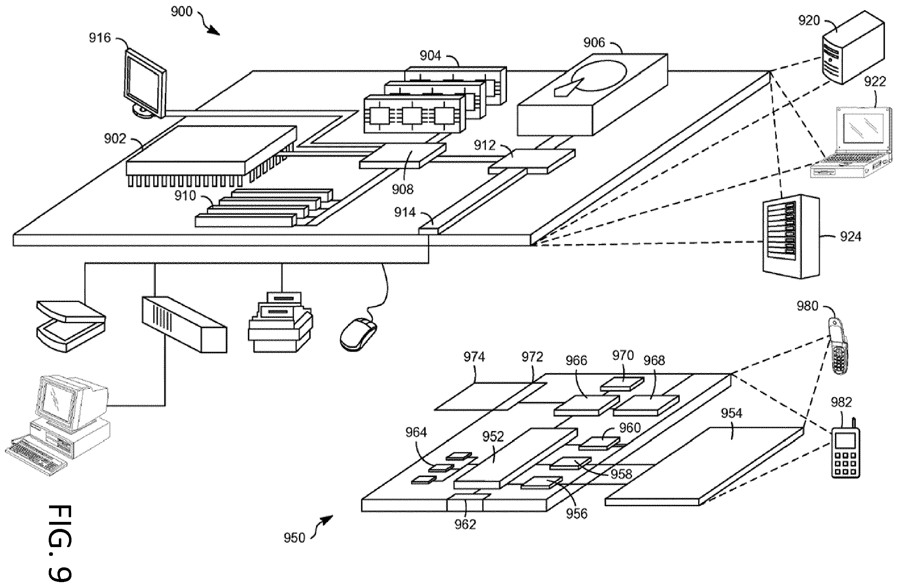

FIG. 9 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to the computer system 100 of FIG. 1. Computing device 950 is intended to represent various forms of mobile devices, such as personal digital assistants, cellular telephones, smart phones, driving assistance systems or board computers of vehicles (e.g., vehicles401, 402, 403, cf. FIG. 1) and other similar computing devices. For example, computing device 950 may be used as a frontend by a user to interact with the computing device 900. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952 that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A computer system (100) for determining state changes of a further system (200) wherein the further system (200) can transition into any one of a plurality of different states (S1, S2, .., Sn), each state being at least partially represented by a corresponding data vector (DV1, DV2, ..., DVn), the computer system (100) comprising:
an interface component (110) configured to receive a particular data vector (DV1) partially representing a particular state (S1) of the further system (200) at a particular point in time (t2);
a classifier component (120) with a plurality of support vector machines (SVM1 to SVMk), each support vector machine having a model data structure (M1 to Mk) which includes a plurality of support vectors configured to classify the particular data vector (DV1);
a data storage component (130) configured to store one copy of each support vector in a support vector data structure (131);
wherein the classifier component (120) is further configured to determine a particular state change (S2→S1) of the further system (200) by:
applying a kernel function (KF) to a subset of support vectors paired with the particular data vector (DV1), the subset including such support vectors in the support vector data structure which are referenced by a particular reduced model data structure (Mr1 to Mrk) being used for the particular state change determination; and
aggregating the kernel function results for the references within the particular reduced model data structure (Mr1 to Mrk);
**characterized in that**
the computer system further comprises a SVM model reducer component (140) configured to replace each support vector in the plurality of model data structures with a reference to the respective storage location in the support vector data structure (131) resulting in a plurality of reduced model data structures; and **in that** the SVM model reducer component (140) is further configured:
to eliminate neutral elements in the support vectors of the support vector data structure;
to store with each non-neutral element its index and value as an index-value pair in the respective support vector;
wherein the data storage component (130) is further configured to store one copy of each index-value pair in an index-value data structure (132); and
wherein the SVM model reducer component (140) is further configured to replace the index-value pairs in the plurality of support vectors with references to the respective storage locations in the index-value data structure (132).

2. The computer system of claim 1, wherein the classifier component (120) is further configured to repeat applying the kernel function (KF) and aggregating the kernel function results for the plurality of reduced model data structures.

3. The computer system of any of the previous claims, wherein
the data storage component (130) is further configured to store, for each pair of support vector and data vector, one copy of the corresponding kernel function result in a result data structure (133); and
each reduced model data structure is configured to retrieve its respective kernel function results from the respective storage locations in the result data structure (133).

4. The computer system of claim 3, wherein
the result data structure is stored in a result cache and the cache address of a particular kernel function result is determined by applying a mapping function to at least the input support vector of the particular kernel function result; and
a particular reduced model data structure is configured to apply the mapping function to at least its input support vectors to determine the cache addresses of the respective kernel function results.

5. The computer system of claim 4, wherein the mapping function is applied to each pair of input support vector and input data vector.

6. The computer system of claim 4 or 5, wherein a particular reduced model data structure (Mr1 to Mrk) is further configured to compute a particular kernel function result in case a particular determined cache address has no kernel function result, and to initiate the storage of the particular kernel function result at the particular determined cache address.

7. The computer system of claim 3, wherein the storage locations of the kernel function results are ordered in a directed acyclic graph, and each reduced model data structure includes respective references to the nodes of the directed acyclic graph to retrieve the respective kernel function results.

8. A computer-implemented method (1000) for determining state changes of a further system (200) wherein the further system can transition into a plurality of different states (S1 to Sn), each state being at least partially represented by a corresponding data vector (DV1 to DVn), the method comprising:
receiving (1100) a plurality of support vector machines (SVM1 to SVMk), each support vector machine having a model data structure (M1 to Mk) which includes a plurality of support vectors configured to classify status data vectors of the further system;
storing (1200) one copy of each support vector in a support vector data structure;
receiving (1400) a particular data vector representing a particular state of the further system at a particular point in time;
determining (1500) a particular state change of the further system by:
applying (1510) a kernel function to a subset of support vectors paired with the particular data vector, the subset including such support vectors in the support vector data structure which are referenced by a particular reduced model data structure being used for the particular state change determination; and
aggregating (1520) the kernel function results for the references within the particular reduced model data structure;
**characterized in that** the method further comprises
replacing (1300) each support vector in the plurality of model data structures with a reference to the respective storage location in the support vector data structure resulting in a plurality of reduced model data structures;
eliminating (1310) neutral elements in the support vectors of the support vector data structure;
storing (1320) with each non-neutral element its index and value as an index-value pair in the respective support vector;
storing (1330) one copy of each index-value pair in an index-value data structure; and
replacing (1340) the index-value pairs in the plurality of support vectors with references to the respective storage locations in the index-value data structure.

9. The method of claim 8, further comprising:
repeating applying (1510) the kernel function and aggregating (1520) the kernel function results for the plurality of reduced model data structures.

10. The method of any of claim 8 or 9, further comprising:
storing, for each pair of support vector and data vector, one copy of the corresponding kernel function result in a result data structure; and
each reduced model data structure retrieving its respective kernel function results from the respective storage locations in the result data structure.

11. The method of claim 10, further comprising:
storing the result data structure in a result cache and determining the cache address of a particular kernel function result by applying a mapping function to at least the input support vector of the particular kernel function result; and
a particular reduced model data structure applying the mapping function to at least its input support vectors to determine the cache addresses of the respective kernel function results.

12. A computer program product that, when loaded into a memory of a computer system for determining state changes of a further system and executed by at least one processor of the computer system, performs the steps of the computer-implemented method according to any of the claims 8 to 11.

## Patentansprüche

1. Computersystem (100) zum Bestimmen von Zustandsänderungen eines weiteren Systems (200), wobei das weitere System (200) in einen von mehreren verschiedenen Zuständen (S1, S2, ... , Sn) übergehen kann, wobei jeder Zustand zumindest teilweise durch einen entsprechenden Datenvektor (DV1, DV2, ... , DVn) dargestellt wird, wobei das Computersystem (100) Folgendes umfasst:
eine Schnittstellenkomponente (110), die dazu ausgebildet ist, einen bestimmten Datenvektor (DV1) zu empfangen, der teilweise einen bestimmten Zustand (S1) des weiteren Systems (200) zu einem bestimmten Zeitpunkt (t2) darstellt;
eine Klassifizierungskomponente (120) mit mehreren Stützvektormaschinen (SVM1 bis SVMk), wobei jede Stützvektormaschine eine Modelldatenstruktur (M1 bis Mk) umfasst, welche mehrere Stützvektoren aufweist, die dazu ausgebildet sind, den bestimmten Datenvektor (DV1) zu klassifizieren;
eine Datenspeicherkomponente (130), die dazu ausgebildet ist, eine Kopie jedes Stützvektors in einer Stützvektordatenstruktur (131) zu speichern;
wobei die Klassifizierungskomponente (120) weiterhin dazu ausgebildet ist, eine bestimmte Zustandsänderung (S2→S1) des weiteren Systems (200) durch Folgendes zu bestimmen:
Anwenden einer Kernel-Funktion (KF) auf einen Teilsatz der Stützvektoren, die mit dem bestimmten Datenvektor (DV1) gepaart sind, wobei der Teilsatz solche Stützvektoren in der Stützvektordatenstruktur aufweist, welche durch eine bestimmte reduzierte Modelldatenstruktur (Mr1 bis Mrk) referenziert sind, die für die Bestimmung der bestimmten Zustandsänderung verwendet wird; und
Aggregieren der Kernel-Funktions-Ergebnisse für die Referenzen innerhalb der bestimmten reduzierten Modelldatenstruktur (Mr1 bis Mrk);
**dadurch gekennzeichnet, dass**
das Computersystem weiterhin eine Reduzierungskomponente für ein SVM-Modell (140) umfasst, die dazu ausgebildet ist, jeden Stützvektor in den mehreren Modelldatenstrukturen durch eine Referenz zu dem jeweiligen Speicherort in der Stützvektordatenstruktur (131) zu ersetzen, was zu mehreren reduzierten Modelldatenstrukturen führt; und dass die Reduzierungskomponente für das SVM-Modell (140) weiterhin dazu ausgebildet ist:
neutrale Elemente in den Stützvektoren der Stützvektordatenstruktur zu eliminieren;
für jedes nicht-neutrale Element dessen Index und Wert als Index-Wert-Paar in dem jeweiligen Stützvektor zu speichern;
wobei die Datenspeicherkomponente (130) weiterhin dazu ausgebildet ist, eine Kopie jedes Index-Wert-Paars in einer Index-Wert-Datenstruktur (132) zu speichern; und
wobei die Reduzierungskomponente für das SVM-Modell (140) weiterhin dazu ausgebildet ist, die Index-Wert-Paare in den mehreren Stützvektoren durch Referenzen zu den jeweiligen Speicherorten in der Index-Wert-Datenstruktur (132) zu ersetzen.

2. Computersystem nach Anspruch 1, wobei die Klassifizierungskomponente (120) weiterhin dazu ausgebildet ist, das Anwenden der Kernel-Funktion (KF) und das Aggregieren der Kernel-Funktions-Ergebnisse für die mehreren reduzierten Modelldatenstrukturen zu wiederholen.

3. Computersystem nach einem der vorigen Ansprüche, wobei
die Datenspeicherkomponente (130) weiterhin dazu ausgebildet ist, für jedes Paar von Stützvektor und Datenvektor eine Kopie des entsprechenden Kernel-Funktions-Ergebnisses in einer Ergebnisdatenstruktur (133) zu speichern; und
jede reduzierte Modelldatenstruktur dazu ausgebildet ist, ihre jeweiligen Kernel-Funktions-Ergebnisse von den jeweiligen Speicherorten in der Ergebnisdatenstruktur (133) abzurufen.

4. Computersystem nach Anspruch 3, wobei
die Ergebnisdatenstruktur in einem Ergebnis-Cache gespeichert wird, und die Cache-Adresse eines bestimmten Kernel-Funktions-Ergebnisses durch Anwenden einer Mappingfunktion auf mindestens den Eingangs-Stützvektor des bestimmten Kernel-Funktions-Ergebnisses bestimmt wird; und
eine bestimmte reduzierte Modelldatenstruktur dazu ausgebildet ist, die Mappingfunktion auf zumindest ihre Eingangs-Stützvektoren anzuwenden, um die Cache-Adressen der jeweiligen Kernel-Funktions-Ergebnisse zu bestimmen.

5. Computersystem nach Anspruch 4, wobei die Mappingfunktion auf jedes Paar von Eingangs-Stützvektor und Eingangs-Datenvektor angewendet wird.

6. Computersystem nach Anspruch 4 oder 5, wobei eine bestimmte reduzierte Modelldatenstruktur (Mr1 bis Mrk) weiterhin dazu ausgebildet ist, ein bestimmtes Kernel-Funktions-Ergebnis zu berechnen, falls eine bestimmte Cache-Adresse kein Kernel-Funktions-Ergebnis aufweist, und die Speicherung des bestimmten Kernel-Funktions-Ergebnisses an der bestimmten Cache-Adresse auszulösen.

7. Computersystem nach Anspruch 3, wobei die Speicherorte der Kernel-Funktions-Ergebnisse in einem gerichteten azyklischen Graphen geordnet werden, und jede reduzierte Modelldatenstruktur jeweilige Referenzen zu den Knoten des gerichteten azyklischen Graphen aufweist, um die jeweiligen Kernel-Funktions-Ergebnisse abzurufen.

8. Computerimplementiertes Verfahren (1000) zum Bestimmen von Zustandsänderungen eines weiteren Systems (200), wobei das weitere System in mehrere verschiedene Zustände (S1 bis Sn) übergehen kann, wobei jeder Zustand mindestens teilweise durch einen entsprechenden Datenvektor (DV1 bis DVn) dargestellt wird, wobei das Verfahren Folgendes umfasst:
Empfangen (1100) mehrerer Stützvektormaschinen (SVM1 bis SVMk), wobei jede Stützvektormaschine eine Modelldatenstruktur (M1 bis Mk) umfasst, welche mehrere Stützvektoren aufweist, die dazu ausgebildet sind, Zustands-Datenvektoren des weiteren Systems zu klassifizieren;
Speichern (1200) einer Kopie jedes Stützvektors in einer Stützvektordatenstruktur;
Empfangen (1400) eines bestimmten Datenvektors, der einen bestimmten Zustand des weiteren Systems zu einem bestimmten Zeitpunkt darstellt;
Bestimmen (1500) einer bestimmten Zustandsänderung des weiteren Systems durch:
Anwenden (1510) einer Kernel-Funktion auf einen Teilsatz der Stützvektoren, die mit dem bestimmten Datenvektor gepaart sind, wobei der Teilsatz solche Stützvektoren in der Stützvektordatenstruktur aufweist, welche durch eine bestimmte reduzierte Modelldatenstruktur referenziert sind, die für die Bestimmung der bestimmten Zustandsänderung verwendet wird; und
Aggregieren (1520) der Kernel-Funktions-Ergebnisse für die Referenzen innerhalb der bestimmten reduzierten Modelldatenstruktur;
**dadurch gekennzeichnet, dass** das Verfahren weiterhin Folgendes umfasst:
Ersetzen (1300) jedes Stützvektors in den mehreren Modelldatenstrukturen durch eine Referenz zu dem jeweiligen Speicherort in der Stützvektordatenstruktur, was zu mehreren reduzierten Modelldatenstrukturen führt;
Eliminieren (1310) von neutralen Elementen in den Stützvektoren der Stützvektordatenstruktur;
für jedes nicht-neutrale Element Speichern (1320) seines Indexes und Werts als Index-Wert-Paar in dem jeweiligen Stützvektor;
Speichern (1330) einer Kopie jedes Index-Wert-Paars in einer Index-Wert-Datenstruktur; und
Ersetzen (1340) der Index-Wert-Paare in den mehreren Stützvektoren durch Referenzen zu den jeweiligen Speicherorten in der Index-Wert-Datenstruktur.

9. Verfahren nach Anspruch 8, weiterhin umfassend:
Wiederholen des Anwendens (1510) der Kernel-Funktion und des Aggregierens (1520) der Kernel-Funktions-Ergebnisse für die mehreren reduzierten Modelldatenstrukturen.

10. Verfahren nach Anspruch 8 oder 9, weiterhin umfassend:
für jedes Paar von Stützvektor und Datenvektor Speichern einer Kopie des entsprechenden Kernel-Funktions-Ergebnisses in einer Ergebnisdatenstruktur; und
wobei jede reduzierte Modelldatenstruktur ihre jeweiligen Kernel-Funktions-Ergebnisse von den jeweiligen Speicherorten in der Ergebnisdatenstruktur abruft.

11. Verfahren nach Anspruch 10, weiterhin umfassend:
Speichern der Ergebnisdatenstruktur in einem Ergebnis-Cache und Bestimmen der Cache-Adresse eines bestimmten Kernel-Funktions-Ergebnisses durch Anwenden einer Mappingfunktion auf zumindest den Eingangs-Stützvektor des bestimmten Kernel-Funktions-Ergebnisses; und
wobei eine bestimmte reduzierte Modelldatenstruktur die Mappingfunktion auf zumindest ihre Eingangs-Stützvektoren anwendet, um die Cache-Adressen der jeweiligen Kernel-Funktions-Ergebnisse zu bestimmen.

12. Computerprogrammprodukt, das, wenn es in einen Speicher eines Computersystem zum Bestimmen von Zustandsänderungen eines weiteren Systems geladen und durch mindestens einen Prozessor des Computersystems ausgeführt wird, die Schritte des computerimplementierten Verfahrens nach einem der Ansprüche 8 bis 11 ausführt.

## Revendications

1. Système informatique (100) permettant de déterminer les changements d'état d'un autre système (200), l'autre système (200) pouvant transiter vers l'un quelconque d'une pluralité d'états différents (S1, S2, ..., Sn), chaque état étant au moins partiellement représenté par un vecteur correspondant de données (DV1, DV2, ..., DVn), le système informatique (100) comprenant :
un composant d'interface (110) configuré pour recevoir un vecteur particulier de données (DV1) représentant partiellement un état particulier (S1) de l'autre système (200) à un instant particulier (t2) ;
un composant de classification (120) doté d'une pluralité de machines de vecteurs supports (SVM1 à SVMk), chaque machine de vecteur support ayant une structure de données de modèle (M1 à Mk) qui comprend une pluralité de vecteurs supports configurés pour classifier le vecteur particulier de données (DV1) ;
un composant de mémorisation de données (130) configuré pour enregistrer un exemplaire de chaque vecteur support dans une structure de données de vecteurs supports (131);
le composant de classification (120) étant en outre configuré pour déterminer un changement d'état particulier (S2→S1) de l'autre système (200) par :
application d'une fonction noyau (KF) à un sous-ensemble de vecteurs supports appariés avec le vecteur particulier de données (DV1), le sous-ensemble comprenant ces vecteurs supports dans la structure de données de vecteurs supports qui sont référencés par une structure particulière de données de modèle réduit (Mr1 à Mrk) qui est utilisée pour la détermination particulière de changement d'état ; et
agrégation des résultats de fonction noyau pour les références au sein de la structure particulière de données de modèle réduit (Mr1 à Mrk) ; **caractérisé en ce que**
le système informatique comprend en outre un composant réducteur de modèle SVM (140) configuré pour remplacer chaque vecteur support de la pluralité de structures modèles de données par une référence à l'emplacement respectif d'enregistrement dans la structure de données de vecteurs supports (131) résultant en une pluralité de structures de données de modèle réduit ; et **en ce que**
le composant réducteur de modèle SVM (140) est en outre configuré :
pour éliminer les éléments neutres présents dans les vecteurs supports de la structure de données de vecteurs supports ;
pour enregistrer, avec chaque élément non neutre, son indice et sa valeur en tant que paire indice-valeur dans le vecteur support respectif ;
le composant de mémorisation de données (130) étant en outre configuré pour enregistrer un exemplaire de chaque paire indice-valeur dans une structure de données indice-valeur (132) ; et
le composant réducteur (140) étant en outre configuré pour remplacer les paires indice-valeur de la pluralité de vecteurs supports par des références aux emplacements respectifs d'enregistrement dans la structure de données indice-valeur (132).

2. Système informatique selon la revendication 1, dans lequel le composant de classification (120) est en outre configuré pour répéter l'application de la fonction noyau (KF) et où l'agrégation de la fonction noyau produit la pluralité de structures de données de modèle réduit.

3. Système informatique selon l'une quelconque des revendications précédentes, dans lequel
le composant de mémorisation de données (130) est en outre configuré pour enregistrer, pour chaque paire de vecteur support et de vecteur données, un exemplaire du résultat de la fonction noyau correspondante dans une structure de données de résultat (133) ; et
chaque structure de données de modèle réduit est configurée pour récupérer ses résultats respectifs de fonction noyau à partir des emplacements respectifs d'enregistrement dans la structure de données de résultat (133).

4. Système informatique selon la revendication 3, dans lequel
la structure de données de résultat est enregistrée dans une mémoire cache de résultat et où l'adresse de mémoire cache d'un résultat particulier de fonction noyau est déterminée par application d'une fonction de mappage à au moins un vecteur support d'entrée du résultat particulier de fonction noyau ; et
une structure particulière de données de modèle réduit est configurée pour appliquer la fonction de mappage à au moins ses vecteurs supports d'entrée pour déterminer les adresses de mémoire cache des résultats respectifs de fonction noyau.

5. Système informatique selon la revendication 4, dans lequel la fonction de mappage est appliquée à chaque paire de vecteur support d'entrée et de vecteur de données d'entrée.

6. Système informatique selon la revendication 4 ou 5, dans lequel une structure particulière de données de modèle réduit (Mr1 à Mrk) est en outre configurée pour calculer un résultat particulier de fonction noyau au cas où une adresse particulière de mémoire cache déterminée n'a aucun résultat de fonction noyau, et pour lancer l'enregistrement du résultat particulier de fonction noyau à l'adresse particulière de mémoire cache déterminée.

7. Système informatique selon la revendication 3, dans lequel les emplacements d'enregistrement des résultats de fonction noyau sont commandés selon un graphe acyclique dirigé, et où chacune des structures de données de modèle réduit comprend des références respectives aux noeuds du graphe acyclique dirigé pour récupérer les résultats respectifs de fonction noyau.

8. Procédé implémenté sur ordinateur (1000) permettant de déterminer les changements d'état d'un autre système (200), dans lequel l'autre système peut passer à une pluralité d'états différents (S1 à Sn), chaque état étant au moins en partie représenté par un vecteur correspondant de données (DV1 à DVn), le procédé comprenant :
la réception (1100) d'une pluralité de machines de vecteurs supports (SVM1 à SVMk), chaque machine de vecteur support présentant une structure de données de modèle (M1 à Mk) qui comprend une pluralité de vecteurs supports configurés pour classifier les vecteurs de données de statut de l'autre système ;
l'enregistrement (1200) d'un exemplaire de chaque vecteur support dans une structure de données de vecteurs supports ;
la réception (1400) d'un vecteur particulier de données représentant un état particulier de l'autre système à un instant particulier ;
la détermination (1500) d'un changement d'état particulier de l'autre système par :
application (1510) d'une fonction noyau à un sous-ensemble de vecteurs supports appariés avec le vecteur particulier de données, le sous-ensemble comprenant ces vecteurs supports dans la structure de données de vecteurs supports qui sont référencés par une structure de données particulières de modèle réduit qu'on utilise pour la détermination de changement d'état particulier ; et
agrégation (1520) des résultats de fonction noyau pour les références se trouvant dans la structure de données de modèle réduit particulier ;
**caractérisé en ce que** le procédé comprend en outre
le remplacement (1300) de chaque vecteur support dans la pluralité de structures de données de modèle par une référence à l'emplacement respectif d'enregistrement dans la structure de données de vecteurs supports, ce qui entraîne une pluralité de structures de données de modèle réduit ;
l'élimination (1310) des éléments neutres parmi les vecteurs supports de la structure de données de vecteurs supports ;
l'enregistrement (1320) avec chaque élément non neutre de son indice et de ses valeurs sous forme de paire indice-valeur dans le vecteur support respectif ;
l'enregistrement (1330) d'un exemplaire de chaque paire d'indice-valeur dans une structure de données d'indice-valeur ; et
le remplacement (1340) des paires d'indice-valeur présentes dans la pluralité de vecteurs supports par des références aux emplacements respectifs d'enregistrement dans la structure de données d'indice-valeur.

9. Procédé selon la revendication 8, comprenant en outre :
la répétition de l'application (1510) de la fonction noyau et de l'agrégation (1520) des résultats de fonction noyau pour la pluralité de structures de données de modèle réduit.

10. Procédé selon l'une quelconque des revendications 8 ou 9, comprenant en outre :
l'enregistrement, pour chaque paire de vecteur support et de vecteur de données, d'un exemplaire du résultat correspondant de fonction noyau dans une structure de données de résultats ; et
chaque structure de données de modèle réduit récupérant ses résultats respectifs de fonction noyau à partir des emplacements respectifs d'enregistrement dans la structure de données de résultats.

11. Procédé selon la revendication 10, comprenant en outre :
l'enregistement de la structure de données de résultats dans une mémoire cache de résultats et la détermination de l'adresse de mémoire cache d'un résultat particulier de fonction noyau par application d'une fonction de mappage au moins au vecteur support d'entrée du résultat particulier de fonction noyau ; et
une structure particulière de données de modèle réduit appliquant la fonction de mappage au moins à ses vecteurs supports d'entrée pour déterminer les adresses de mémoire cache des résultats respectifs de fonction noyau.

12. Produit de type programme informatique qui, quand il est chargé dans une mémoire d'un système informatique pour déterminer les changements d'état d'un autre système et qu'il est exécuté par au moins un processeur du système informatique, effectue les étapes du procédé implémenté par un ordinateur selon l'une quelconque des revendications 8 à 11.
